# EUROPEAN PATENT APPLICATION

(11) **EP 1 689 178 A1**
(43) Date of publication of application: **09.08.2006**
(21) Application number: 04792454.3
(22) Date of filing: 15.10.2004
(51) Int. Cl.: H04N 5/93

(54) **RESUME REPRODUCTION SYSTEM**

(30) Priority: 04.11.2003 JP 2003374877
(71) Applicant: SHARP KABUSHIKI KAISHA, Osaka-shi, Osaka 545-8522 (JP)
(72) Inventor: HASEGAWA, Susumu, Nara-shi, Nara 631-0072 (JP); NAKABAYASHI, Jiroh, Tokyo 1680081 (JP); KUSUMOTO, Nobuo, 2900142 (JP); EMA, Nobuyuki; Lions Mansion, Nagareyama-shi Chiba;2700163 (JP)
(74) Representative: Müller, Frithjof E.
(86) International application number: PCT/JP2004/015237
(87) International publication number: WO 2005/043901

(57) **Abstract**

A terminal for performing synchronized reproductions related to data of different data formats such as image, audio and text, comprising a GUI part (11) for allowing an operator to edit; an operation managing part (12) for controlling processings related to a resume reproduction operation; an moving image file processing part (13) for controlling processings related to reproduction of a moving image file; a reproduction information file processing part (15) for processing control information for executing the resume reproduction; and storage parts (17). The moving image file processing part (13) has a separating part (141) for separating the data in the moving image file for each type of data; an image processing part (142) for encoding and decoding the image data; an audio processing part (143) for decoding the audio data; and a telop processing part (144) for decoding telop data. The reproduction information file processing part (15) has an analyzing part (16). The storage parts (17A, 17B) store moving image files (18A, 18B), reproduction information files (19A, 19B) and reproduction processing reference files (20A, 20B).

## Description

### Technical Field

The present invention relates to a system of resuming a reproduction from a reproduction interruption position, and resuming a reproduction from an arbitrary position specified by an operator (i.e. resume reproduction) which is performed independently by a device, or between devices, for reproducing a moving image file in an arbitrary format, and particularly, to a system of resuming a reproduction when using a terminal.

### Background Art

Conventionally, proposals have been made as to a method of reproducing a moving image file from an arbitrary intermediate position. For example, a method is disclosed which performs a reproduction from an arbitrary intermediate frame by presetting frame information for dynamic image encoded data and several frames of the dynamic image encoded data (for example, see Patent Document 1). A description will be given of the reproduction from the intermediate frame, assuming that the dynamic image encoded data is data A, and the frame information is data B. In the frame information, there are described reference image data required when reproducing the intermediate frame in the dynamic image encoded data, and an address indicating at what position in the data A encoded data of the intermediate frame is stored.

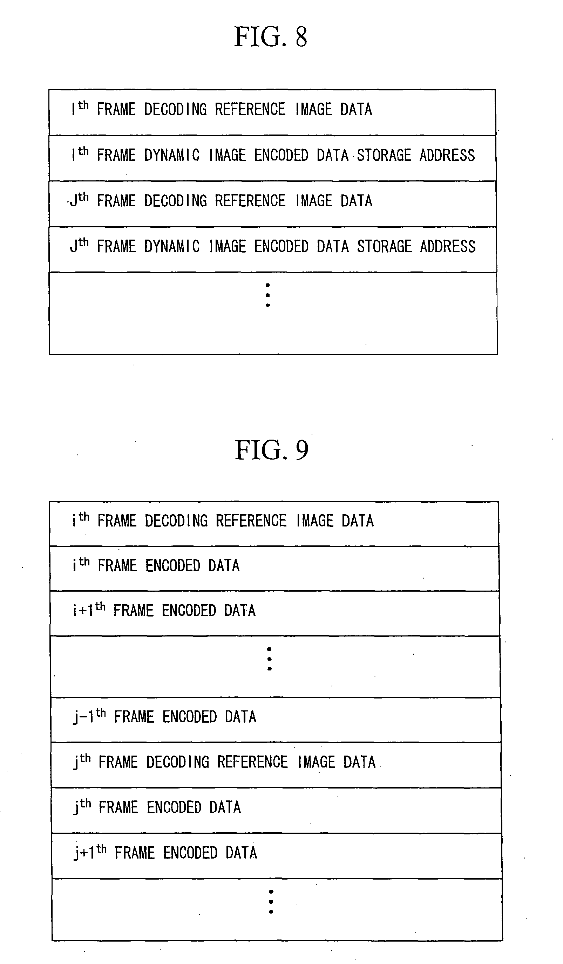

The frame information is set for several frames among all frames composing the dynamic image encoded data. The frames for which the frame information is set can be selected arbitrarily, and a random access becomes possible for the frame selected arbitrarily. Accordingly, as a result, arbitrary frames can be randomly accessed. FIG. 8 shows an example of a composition of such frame information. In a frame composition shown in FIG. 8, data and an address of each frame are stored in relation to each other, such as reference image data for decoding an I^{th} frame, and an address at which dynamic image encoded data of the I^{th} frame is stored.

The frame information may have a different composition. FIG. 9 shows an example of the different composition. In the example of the composition shown in FIG. 9, the frame information is composed of reference image data, encoded data of an intermediate frame, and encoded data of each frame following the intermediate frame. Encoded data included in one frame information is encoded data of a frame immediately preceding a frame of first encoded data in a following frame information. Also in this case, the frame information is set for several frames among all frames composing a dynamic image. The frames for which the frame information is set can be selected arbitrarily. Accordingly, a random access becomes possible for the frame selected arbitrarily. Besides, the whole frame information includes all the frames composing the dynamic image.

### Patent Document 1: Japanese Patent Application Laid-Open No. 7-203358

### Disclosure of Invention

### Problems to be Solved by the Invention

According to the method disclosed in the above-mentioned Patent Document 1, it is necessary to preset the frame information which includes all the frames of the dynamic image encoded data. The frame information contains a plurality of reference image data, and addresses of encoded data following the reference image data, or the encoded data per se. In other words, the frame information in Patent Document 1 is information obtained by extracting arbitrary portions of the dynamic image encoded data into a form of a file. Such a method necessitates man-hour for presetting the frame information, and a storage area for storing the frame information.

By the way, as the number of frames in the dynamic image encoded data increases, i.e., as a reproduction time becomes longer, the frame information increases, necessitating a large amount of storage area. Besides, according to the above-mentioned method, an operator needs to specify an intermediate frame for each reproduction from an arbitrary intermediate position of the dynamic image encoded data.

It is an object of the present invention to provide technique for performing a smooth reproduction from a previous stop position at which a reproduction of dynamic image encoded data is stopped last time during the reproduction, when reproducing the same dynamic image encoded data next time.

### Means for Solving the Problems

Resume reproduction technique according to the present invention includes a reproduction resuming function of storing a position at which a moving image file is stopped during a reproduction, or a position specified arbitrarily, and thereby performing a reproduction automatically from the previous stop position when reproducing the same moving image file next time. The reproduction resuming function is hereinafter referred to as "resume reproduction function."

That is, the present invention includes in a terminal for reproducing a moving image file, a GUI part for an operator to perform a reproduction operation, a storage part for storing a moving image file composed of different types of data, such as image, audio and telop, a reproduction information file in which control information concerning a reproduction operation is described, and a reproduction processing reference file of an arbitrary number of frames upon a reproduction stop, a moving image file processing part for performing the reproduction process for the moving image file, a reproduction information file processing part for performing a reading/writing and an analysis of the reproduction information file, and an operation managing part for controlling the moving image file processing part and the reproduction information file processing part.

Accordingly, a resume reproduction is made possible which resumes a reproduction from a position at which an operator has interrupted the reproduction, or from a position which the operator has specified arbitrarily. Besides, a creation of a collateral setting file is made unnecessary for reproducing a moving image file from an arbitrary intermediate position.

### Effect of the Invention

According to a resume reproduction system of the present invention, reproduction of a moving image file can be resumed from an arbitrary reproduction interruption position and an arbitrary position. Besides, since reproduction control information and reproduction process reference data necessary for the resume reproduction are in the form of files, the reproduction resuming function can be performed independently by a terminal, and between different terminals, including the resume reproduction system. Accordingly, there are advantages that the operation becomes easier, and that a degree of freedom for the operation improves.

### Brief Description of the Drawings

FIG. 1 is a diagram showing an example of a configuration of a resume reproduction system according to one embodiment of the present invention.
FIG. 2A is a flowchart showing a process flow, in conjunction with FIG. 2B, in which an operator reproduces a moving image file for the first time, and eventually a reproduction information file is created, in the resume reproduction system according to the embodiment of the present invention.
FIG. 2B is a flowchart following FIG. 2A and showing the process flow in which the operator reproduces the moving image file for the first time, and eventually the reproduction information file is created, in the resume reproduction system according to the embodiment of the present invention.
FIG. 3A is a flowchart showing an operation flow, in conjunction with FIG. 3B and FIG. 3C, of performing a resume reproduction according to the moving image file and the reproduction information file in the resume reproduction system according to the embodiment of the present invention.
FIG. 3B is a flowchart following FIG. 3A and showing the operation flow of performing the resume reproduction according to the moving image file and the reproduction information file in the resume reproduction system according to the embodiment of the present invention.
FIG. 3C is a flowchart following FIG. 3B and showing the operation flow of performing the resume reproduction according to the moving image file and the reproduction information file in the resume reproduction system according to the embodiment of the present invention.
FIG. 4 is a diagram showing an example of a basic structure of the moving image file in the resume reproduction system according to the embodiment of the present invention.
FIG. 5 is a diagram showing an example of a configuration of a moving image file processing part according to the embodiment of the present invention.
FIG. 6 is a diagram showing an example of a structure of a reproduction processing reference file in the resume reproduction system according to the embodiment of the present invention.
FIG. 7 is a diagram showing an example of a structure of the reproduction information file in the resume reproduction system according to the embodiment of the present invention.
FIG. 8 is a diagram showing an example of a composition of a general frame information, in which data and an address of each frame are stored in relation to each other, such as reference image data for decoding an I^{th} frame, and an address at which dynamic image encoded data of the I^{th} frame is stored.
FIG. 9 is a diagram showing an example of a frame information different from that of FIG. 8, in which the frame information is composed of reference image data, encoded data of an intermediate frame, and encoded data of each frame following the intermediate frame.

### Best Mode for carrying out the Invention

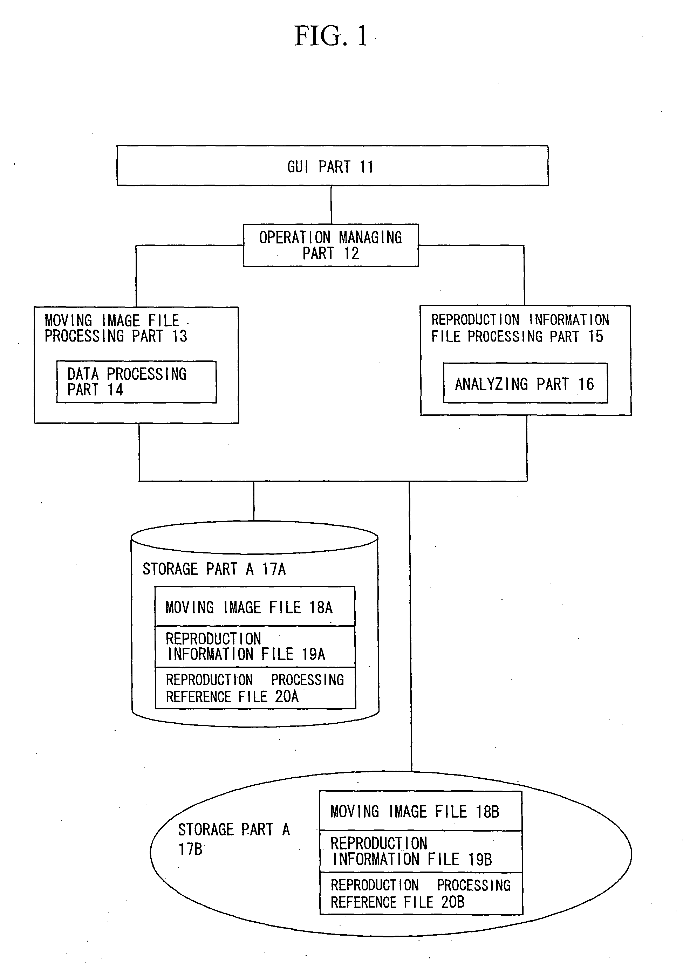

Hereinafter, a description will be given, with reference to the drawings, of a resume reproduction system according to an embodiment of the present invention. FIG. 1 is a block diagram showing a system configuration concerning a resume reproduction function (hereinafter referred to as "resume reproduction system") according to the present embodiment. As shown in FIG. 1, the resume reproduction system according to the present embodiment is configured in a terminal for reproducing moving image data in an arbitrary format, including a GUI part (i.e. an input operation part) 11 for an operator to perform an editing operation, an operation managing part 12 for controlling a process concerning a resume reproduction operation, a moving image file processing part 13 for controlling a process concerning a reproduction of a moving image file, a reproduction information file processing part 15 for processing control information for executing a resume reproduction, a storage part 17A and a storage part 17B. The moving image file processing part 13 includes a data processing part 14 for performing processes of reproducing and recording each of different types of data included in the moving image file.

The reproduction information file processing part 15 includes an analyzing part 16 for analyzing reproduction information. The storage part 17A is located within the terminal having the resume reproduction system, and includes storage areas for storing a moving image file 18A, a reproduction information file 19A, and a reproduction processing reference file 20A, respectively. The storage part 17B is located on an external network, and includes storage areas for storing a moving image file 18B, a reproduction information file 19B, and a reproduction processing reference file 20B, respectively, as does the storage part 17A.

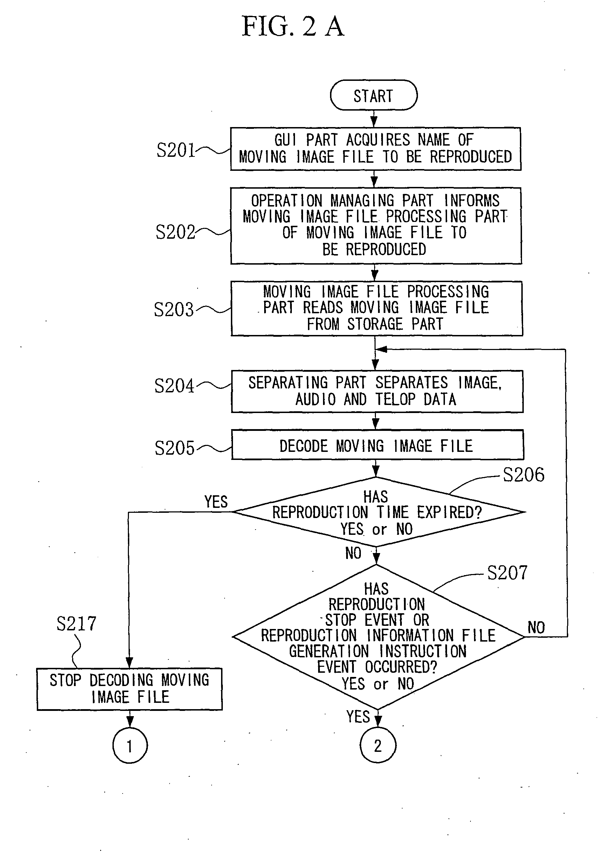

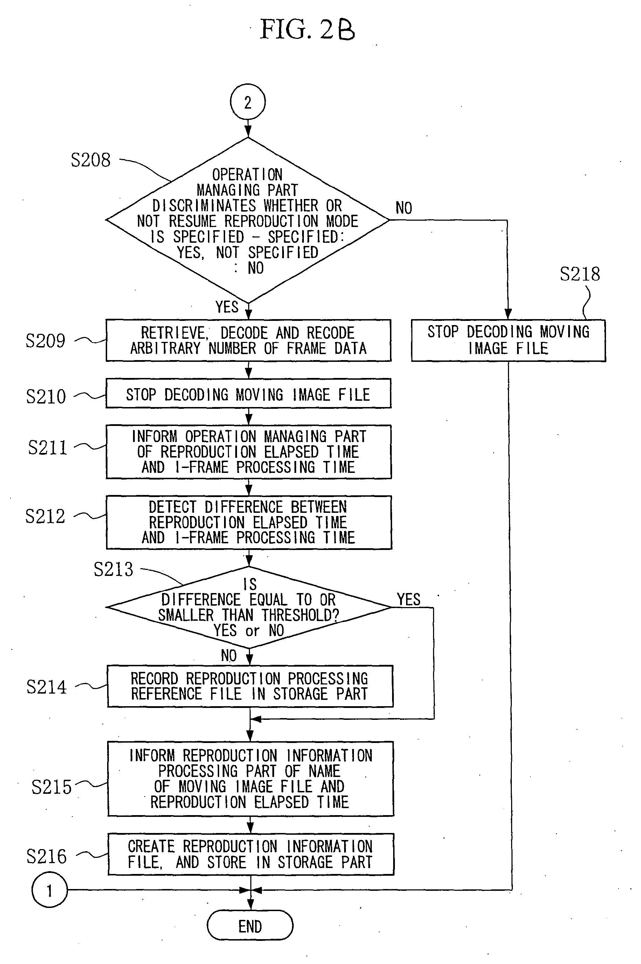

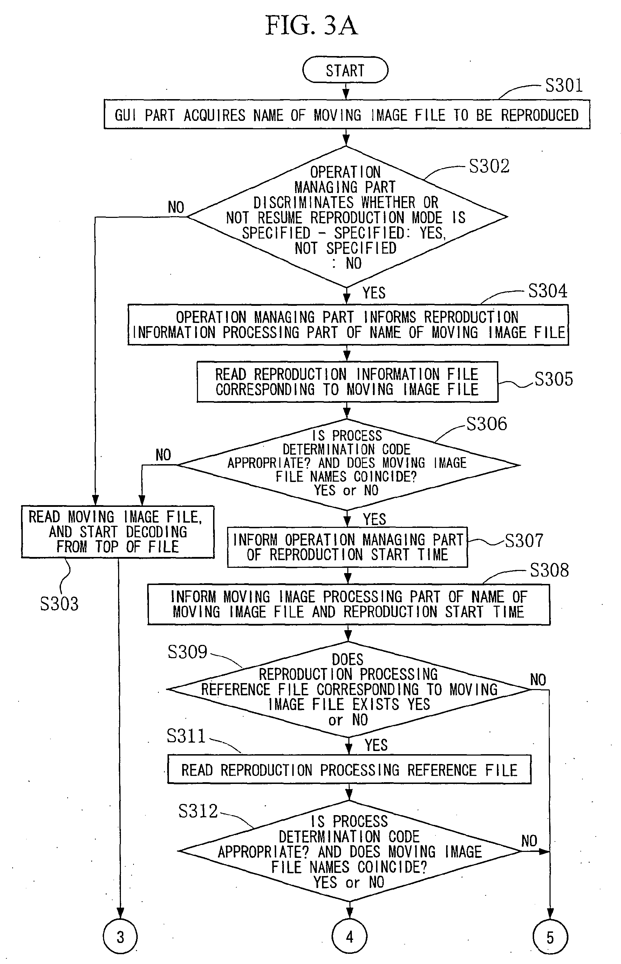

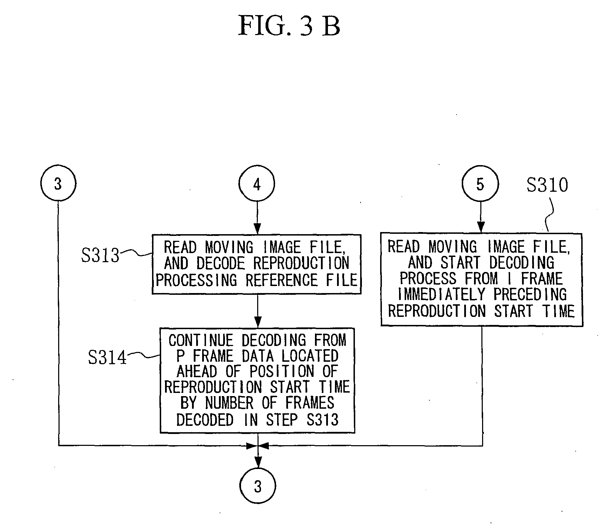

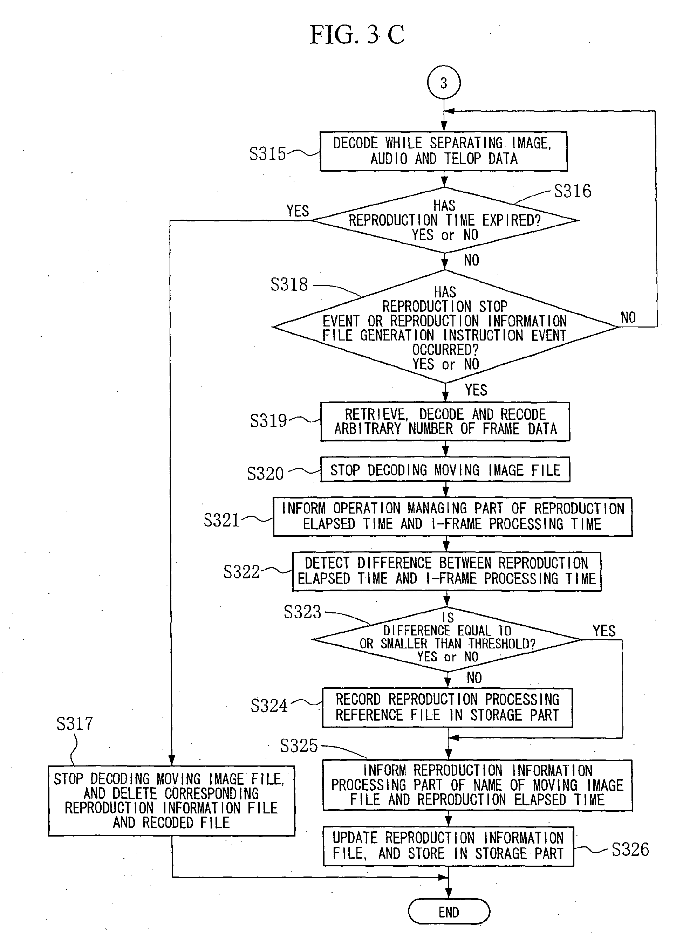

Here, a description will be given, with reference to flowcharts shown in FIG. 2A, FIG. 2B, FIG. 3A, FIG. 3B, and FIG. 3C, of a process flow taken when the operator performs the resume reproduction of the moving image file in the resume reproduction system shown in FIG. 1.

FIG. 2A and FIG. 2B are the flowcharts showing a flow in which the operator reproduces the moving image file for the first time, and eventually the reproduction information file is created. The description will be given, also with reference to FIG. 1. The process flow is described with reference to FIG. 1 and FIGS. 2A and 2B. First, in step S201, the GUI part 11 acquires a name of a moving image file to be reproduced, according to an operation event from an operator.

In step S202, the operation managing part 12 informs the moving image file processing part 13 of the name of the moving image file acquired from the GUI part 11. The moving image file processing part 13 reads the corresponding moving image file (the moving image file) from the storage part 17A or the storage part 17B in step S203. Either the storage part 17A within the terminal or the storage part 17B on the external network is selectively used, normally by discriminating a pathname in specifying the file name.

For example, in an example of the present embodiment, the pathname is composed of a combination of "drive name" + "moving image file name" for the storage part 17A within the terminal, and a combination of "URL" + "moving image file name" is presented for the storage part 17B on the external network. For example, "c:¥resume¥douga_file.(extension)" implies the storage part 17A, and "http://www.resume.com/douga_file.(extension)" implies the storage part 17B. In the present embodiment, the description is given, assuming that a file within the storage part 17A is specified.

Next, a description will be given of the moving image file. The moving image file is normally composed of different types of data, such as image data, audio data, and telop data. To reduce a size of the file, an encoding process is often applied to the image data and the audio data so that the data is held in a compressed form. In this case, in order to reproduce the data, a decoding process needs to be performed. Encoding methods include a method of generating one basic frame data and difference frame data thereof, and a method of completing data for each frame.

The former is a method publicly known as an encoding method and a decoding method for image which use an interframe prediction, and includes a method, such as MPEG4,H.263, for an image, and a well-known method called AMR for audio. The method in which each frame is completed includes a method called Motion-JPEG, and an encoding method called JEPG is used for each frame. Each frame can be considered as a basic frame.

The moving image file also includes an animation. According to a method called vector animation, there is a relation between one basic frame data and difference frame data, and a difference value for each coordinate value set in the basic frame data is recorded in the difference frame data. In the present embodiment, the description is given, using a method which is widespread as a format for a moving image file. That is, the description is premised on a case where image data and audio data are encoded using an interframe prediction, and the file format includes different types of data, such as the image data, the audio data, and text data (i.e. telop), being multiplexed. Hereinafter, the description is continued on the assumption that the moving image file is the above-mentioned multiplex file.

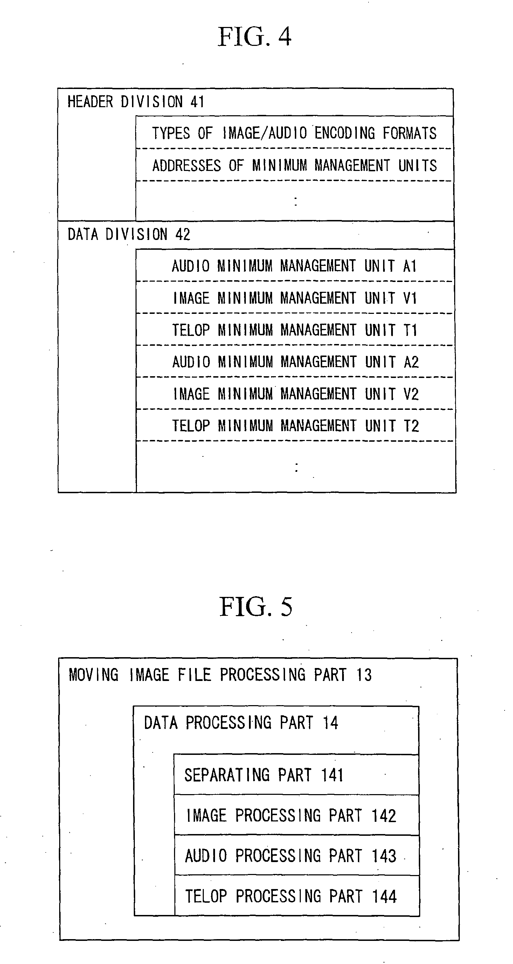

For processing a moving image file, a detailed configuration of the data processing part 14 is shown in FIG. 5. The data processing part 14 includes a separating part 141, an image processing part 142, an audio processing part 143, and a telop processing part 144. The separating part 141 separates image data, audio data and telop data included in moving image file 18A, in step S204.

Here, a description will be given, with reference to FIG. 4, of an example of a basic structure of the above-mentioned moving image file 18A. As shown in FIG. 4, the moving image file is composed mainly of a header division 41 and a data division 42. The header division 41 includes types of encoding formats, such as an image encoding format and an audio encoding format included in the file, and addresses indicating positions of management units of the image data, the audio data and the telop data stored separately in minimum management units in the data division. The minimum management units of each of the image data, the audio data, and the telop data are stored in the data division 42. Here, the minimum management units of the data are units into which image/audio stream data and a string of characters are divided, and are defined such that one frame equals one minimum management unit V1, V2, ... for image, an arbitrary number of frames equal one minimum management unit A1, A2, ... for audio, and an arbitrary number of characters having identical telop attributes equal one minimum management unit T1, T2, ... for telop, for example.

A separation process in separating part 141 means a process of searching the addresses of the minimum management units in the header division 41, retrieving the respective minimum management units of the data for image, audio and telop, and restoring a string of the image and audio stream data, and all characters of the telop, on a work memory.

Next, a description will be given of contents of the image stream data. The stream data is a string of data in frame units, and is composed of basic frame data, i.e., an I frame, and difference frame data, i.e., P frames.

The I frame is a frame including all data of information necessary for decoding one frame, and the P frames are frames including only difference data from an immediately preceding frame. That is, upon decoding image data, for example, a decoding process for one frame is first performed using the I frame, and subsequently, a decoding process for a following one frame is performed according to the decoded data of one frame, and a P frame including only the difference.

Next, in step S205, the moving image file processing part 13 transfers the corresponding data to each of the image processing part 142, the audio processing part 143, and the telop processing part 144, and performs a decoding process of the moving image file 18A. In step S206, the moving image file processing part 13 determines whether or not a reproduction time has expired by determining whether or not a time to reproduce predetermined in the moving image file 18A and an elapsed time for the decoding process coincide. In case of "YES," the process flow proceeds to step S217 to stop the decoding process, and ends the reproduction of the moving image file 18A. In case of "NO," the process flow proceeds to step S207.

In step S207, the operation managing part 12 determines whether or not a reproduction stop event or a reproduction information file generation instruction event has occurred according to an event from the operator. When the reproduction stop event or the reproduction information file generation instruction event has occurred (in case of "YES"), the process flow proceeds to step S208 to shift to a creation of a related file for performing a resume reproduction. When the reproduction stop event has not occurred (in case of "NO"), the process flow returns to step S204 to continue the separation process of the moving image file 18A.

In step S208, the operation managing part 12 discriminates whether or not a resume reproduction mode is specified according to the event from the operator. In case of "YES," the process flow proceeds to step S209, and continues the creation of the related file for performing the resume reproduction. In case of "NO," the process flow proceeds to step S218 to stop the decoding process, and ends the reproduction of the moving image file 18A (END).

In step S209, the image processing part 142 retrieves an arbitrary number of frame data including data of at least one frame from the moving image file, after the occurrence of the reproduction stop event or the reproduction information file generation instruction event. Then, a decoding process is performed for data of at least one frame among a plurality of the frame data, and a recoding process is performed subsequently. Next, a basic frame generated by the recoding process and the remaining frame data retrieved previously from the moving image file are coupled, and stored temporarily in the work memory within the terminal as reproduction process reference data. Of course, all of the arbitrary number of the frame data retrieved from the moving image file may be recoded.

In step S210, the moving image file processing part 13 stops all the decoding processes. Next, in step S211, the moving image file processing part 13 informs the operation managing part 12 of an elapsed time at which the decoding process is executed, i.e., a reproduction elapsed time, and a decoding process time for the last I frame executed during the decoding process, i.e., an I-frame processing time.

In step S212, the operation managing part 12 detects a difference between the reproduction elapsed time and the I-frame processing time, and, in step S213, determines whether or not a value of the difference is equal to or smaller than a predetermined threshold value. Here, the threshold value is a value with which it can be determined whether or not the resume reproduction is effective. When a determination result in step S213 indicates that the value of the difference is equal to or smaller than the threshold value, the process flow proceeds to step S215, and when the determination result in step S213 indicates that the value of the difference is equal to or larger than the threshold value, the process flow proceeds to step S214. In step S214, the moving image processing part 142 stores the reproduction process reference data stored in the above-mentioned work memory, as a reproduction processing reference file in the storage part 17A.

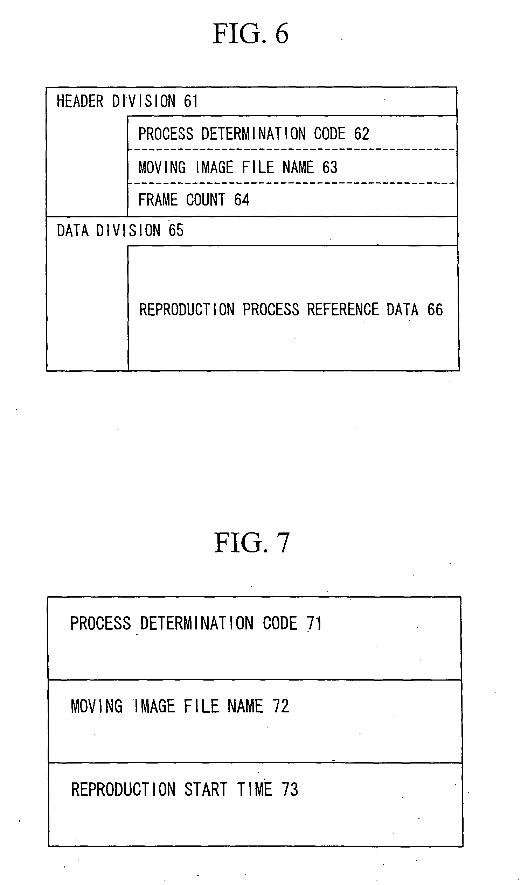

A description will be given, with reference to FIG. 6, of a structure of the reproduction processing reference file. As shown in FIG. 6, the reproduction processing reference file is divided mainly into a header division 61 and a data division 65. The header division 61 includes a process determination code 62 which indicates whether or not an arbitrary file is suitable for the resume reproduction, a corresponding moving image file name 63, a frame count 64 which indicates a number of all the frame data stored in the file, and a reproduction process reference data 66.

In the hereinafter-described resume reproduction operation, it is determined whether or not to set a reproduction start position of an image to an I frame in the image stream data. However, when a reproduction is performed while setting the reproduction start position to the I frame, in a moving image file including the I frame only at a top of the file, or in a moving image file including the I frames at large intervals, an error becomes large between a position at which the operator stops the reproduction and a position at which the resume reproduction is actually started. Specifically, the difference between the reproduction elapsed time and the I-frame processing time becomes the error.

The above-mentioned threshold value indicates an allowable error between the position at which the operator stops the reproduction and the start position at which the resume reproduction is actually to be performed. When the error is equal to or smaller than the threshold value, the resume reproduction is performed from the I frame in the image stream data. When the error is larger than the threshold value, the resume reproduction is performed from the data of one frame created by the recoding process, i.e., the newly created I frame.

Accordingly, the error between the stop position intended by the operator and the actual reproduction start position can be minimized. Besides, unnecessary encoding processes and the creation of the file used only for the resume reproduction, i.e., the reproduction processing reference file, do not need to be performed. When the difference value in step S213 is larger than the threshold value, the process flow proceeds to step S214, and the moving image file processing part 13 records the reproduction processing reference file in the storage part 17A. When the difference value is equal to or smaller than the threshold value, the process flow proceeds to step S215.

In the present resume reproduction system, of course, the reproduction processing reference file may be recorded with no exception without performing the informing and determining process from step S211 to step S213. In this case, although the reproduction processing reference file necessarily uses an area in the storage part for its size, accuracy of the position to start the resume reproduction improves.

In step S215, the operation managing part 12 informs the reproduction information file processing part 15 of the name of the reproduced moving image file and the reproduction elapsed time. Next, in step S216, the reproduction information processing part 15 creates a reproduction information file according to the name of the moving image file and the reproduction elapsed time, and records the reproduction information file in the storage part 17A. Here, a description will be given, with reference to FIG. 7, of an example of a structure of the reproduction information file. As shown in FIG. 7, the reproduction information file includes a process determination code 71 which indicates whether or not an arbitrary file is suitable for the resume reproduction, a corresponding moving image file name 72, and a reproduction start time 73 which indicates the reproduction start position of the moving image file 18A. The processing in the present resume reproduction system ends all of the reproduction operation after recording the reproduction information file in the storage part 17A.

Next, a description will be given, with reference to the flowcharts shown in FIG. 3A, FIG. 3B and FIG. 3C, of a procedure of the resume reproduction performed by the processing described with reference to FIG. 2A and FIG. 2B according to the moving image file 18A and the reproduction information file 19A.

In step S301, the GUI part acquires a name of the moving image file to be reproduced. Then, in step S302, the operation managing part 12 discriminates whether or not the resume reproduction mode has been specified according to an event from the operator. When the resume reproduction mode has been specified, the procedure proceeds to step S304. When the resume reproduction mode is not specified, the procedure proceeds to step S303, and the operation managing part 12 informs the moving image file processing part 13 of the name of the moving image file to be reproduced. The moving image file processing part 13 reads the corresponding moving image file, and starts a decoding process from a top of the file. In step S304, the operation managing part 12 informs the reproduction information file processing part 15 of the name of the moving image file. In step S305, the reproduction information file processing part 15 reads the reproduction information file corresponding to the name of the moving image file.

Here, an example of a name of the reproduction information file corresponding to the name of the moving image file is shown. When the name of the moving image file is "SAMPLE.(extension A)," the reproduction information file is given a name "SAMPLE.(extension B)" to establish a correspondence between the two files. The extension A indicates a moving image file, and the extension B indicates a reproduction information file.

In step S306, the analyzing part 16 determines whether or not the process determination code described in the reproduction information file suits for the resume reproduction, and the name of the moving image file described in the reproduction information file coincides with the name of the moving image file informed of by the operation managing part 12. When the moving image file names coincide, the procedure proceeds to step S307. When the moving image file names do not coincide, the procedure proceeds to step S303, and the operation managing part 12 informs the moving image file processing part 13 of the name of the moving image file to be reproduced. The moving image file processing part 13 reads the corresponding moving image file, and starts a decoding process from the top of the file.

In step S307, the reproduction information file processing part 15 informs the operation managing part 12 of the reproduction start time described in the reproduction information file. In step S308, the operation managing part 12 informs the moving image file processing part 13 of the name of the moving image file to be reproduced and the reproduction start time. In step S309, the moving image file processing part 13 performs search to determine whether or not the reproduction processing reference file 20A corresponding to the name of the moving image file exists in the storage part 17A. When the reproduction processing reference file 20A exists in the storage part 17A, the procedure proceeds to step S311. When the reproduction processing reference file 20A does not exist in the storage part 17A, the procedure proceeds to step S310, and after reading the moving image file, a decoding process is started from an I frame located immediately before the reproduction start time.

In step S311, the moving image file processing part 13 reads the reproduction processing reference file.

In step S312, the image processing part 142 determines whether or not the process determination code in the reproduction processing reference file suits for the resume reproduction, and the name of the moving image file described in the reproduction processing reference file coincides with the name of the moving image file informed of by the operation managing part 12.

When the moving image file names coincide, the procedure proceeds to step S313. When the moving image file names do not coincide, the procedure proceeds to step S310, and after reading the moving image file, a decoding process is started from an I frame located immediately before the reproduction start time.

In step S313, the moving image file processing part 13 reads the moving image file, and further performs a decoding process for frame data in the reproduction processing reference file. In step S314, a decoding process is started from a P frame located at a position ahead of the position of the reproduction start time by a number of frames decoded in step S313.

In step S315, the moving image file processing part 13 decodes the moving image file while controlling the separating part 141, the image processing part 142, the audio processing part 143 and the telop processing part 144. In step S316, the moving image file processing part 13 determines whether or not a reproduction time has expired according to whether or not the time to reproduce predetermined in the moving image file and the elapsed time for the decoding process coincide. When the reproduction time has expired (in case of "YES"), the procedure proceeds to step S317, in which the moving image file processing part 13 stops all the decoding processes, and when the reproduction information file and the reproduction processing reference file corresponding to the moving image file exist, the moving image file processing part 13 deletes the reproduction information file and the reproduction processing reference file. After deleting the reproduction information file and the reproduction processing reference file, the present resume reproduction system ends all of the reproduction operation.

When the reproduction time has not expired (in case of "NO"), the procedure proceeds to step S318. In step S318, the operation managing part 12 determines whether or not a reproduction stop event or a reproduction information file generation instruction event has occurred according to the event from the operator. When the reproduction stop event or the reproduction information file generation instruction event has occurred (in case of "YES"), the procedure proceeds to step S319 to shift to a creation of a related file for performing the resume reproduction. When the reproduction stop event has not occurred (in case of "NO"), the procedure returns to step S315 to continue the separation process of the moving image file.

In step S319, the image processing part 142 retrieves an arbitrary number of frame data including data of at least one frame from the moving image file, after the occurrence of the reproduction interruption event or the reproduction information file generation instruction event. Then, a decoding process is performed for data of at least one frame among a plurality of the frame data, and a recoding process is performed subsequently.

Subsequently, a basic frame generated by the recoding process and the remaining frame data retrieved previously from the moving image file are coupled, and stored temporarily in the work memory within the terminal as reproduction process reference data. Of course, all of the arbitrary number of the frame data retrieved from the moving image file may be recoded.

In step S320, the moving image file processing part 13 stops all the decoding processes. Next, in step S321, the moving image file processing part 13 informs the operation managing part 12 of the elapsed time at which the decoding process is executed, i.e., the reproduction elapsed time, and the decoding process time for the last I frame executed during the decoding process, i.e., the I-frame processing time.

In step S322, the operation managing part 12 detects a difference between the reproduction elapsed time and the I-frame processing time, and, in step S323, determines whether or not a value of the difference is equal to or smaller than the predetermined threshold value. Here, the threshold value is a value with which it can be determined whether or not the resume reproduction is effective. When a determination result in step S323 indicates that the value of the difference is equal to or smaller than the threshold value, the procedure proceeds to step S325, and when the determination result in step S323 indicates that the value of the difference is equal to or larger than the threshold value, the procedure proceeds to step S324. In step S324, the moving image processing part 142 stores the reproduction process reference data stored in the above-mentioned work memory, as a reproduction processing reference file in the storage part 17A.

In step S325, the operation managing part 12 informs the reproduction information file processing part 15 of the name of the reproduced moving image file and the reproduction elapsed time. Next, in step S326, the reproduction information file processing part 15 overwrites the existing reproduction information file with a reproduction information file according to the name of the moving image file and the reproduction elapsed time, and records the reproduction information file in the storage part 17A.

The resume reproduction system ends all of the reproduction operation after recording the reproduction information file.

With reference to the above-described flowcharts, the description was given of the moving image file having the format in which different types of data, such as image data and audio data encoded using an interframe prediction, and text data (i.e. telop), are multiplexed. Here, descriptions will be given of cases with other file formats. In a moving image file having a format in which each image frame is completed, each frame is a basic frame, and therefore the generating process for the reproduction processing reference file is unnecessary. In the resume reproduction system, only a generation of a reproduction information file for specifying a reproduction resuming position of an arbitrary frame may be performed.

In a moving image file in a vector animation format, there is a relation between basic frame data and difference frame data as in the moving image file in the interframe prediction format, and therefore a reproduction resuming position depends on a position of a basic frame or a position of a reproduction process reference frame.

The reproduction process reference frame is generated by accumulating a difference value of each coordinate upon reproducing the difference frame data, and when the reproduction information file generation instruction event has occurred, reflecting the accumulated coordinate difference value on each coordinate value of the basic frame processed immediately before. Then, the generated reproduction process reference frame is stored as the reproduction processing reference file.

The above-described embodiment sets forth the method of performing a recoding process to generate a basic frame, in order to generate reproduction process reference data from image data using an interframe prediction. Of course, the recoding process is not the only method for generating the reproduction process reference data.

A decoded frame as is may also be used as reproduction process reference data as image data in YUV format or RGB format. In this case, since an encoding process is not performed, the reproduction process reference data has a large file size, but an image quality improves upon resuming a reproduction.

With reference to the above-described flowcharts, the description was given of the operation performed independently by the terminal including the resume reproduction system. However, the resume reproduction can be performed also by transferring the moving image file, the reproduction information file and the reproduction processing reference file in the storage part 17A to another terminal including a similar resume reproduction system.

As described above, by using the resume reproduction system according to the present embodiment, reproduction of a moving image file can be resumed from an arbitrary reproduction interruption position. Besides, since reproduction control information and reproduction process reference data necessary for the resume reproduction are in the form of files, the reproduction resuming function can be performed independently by the terminal including the resume reproduction system, or with another different terminal.

Further, upon the resume reproduction, an allowable error between a reproduction resuming position intended by the operator and an actual reproduction resuming position, which is predetermined as a threshold value, is used for determining a creation of the reproduction processing reference file. Accordingly, a moving image file can be reproduced from an arbitrary intermediate position without creating an unnecessary file.

### Industrial Applicability

The present invention is applicable to resume reproduction of various multiplexed data.

## Claims

1. A resume reproduction system which is a system device for reproducing moving image data in an arbitrary format (including a file in which still images are recorded continuously, and an animation file; same hereinafter), comprising:
an input operation part for performing an input operation;
a storage part for storing a moving image data file, a reproduction information file in which control information concerning a reproduction process, including a reproduction position of the moving image file, is described, and a reproduction processing reference file composed of image data of an arbitrary number of unit frames;
a moving image file processing part for performing the reproduction process for the moving image file;
a reproduction information file processing part for performing a reading/writing and an analysis of the reproduction information file; and
an operation managing part for controlling the moving image file processing part and the reproduction information file processing part.

2. The resume reproduction system as claimed in claim 1, wherein the storage part is incorporated in a terminal including the resume reproduction system, attached externally, or associated on an external network.

3. The resume reproduction system as claimed in claim 1 or 2, wherein the moving image file processing part includes a data processing part for performing at least one of processes of reproducing and recording each of different types of data included in the moving image file.

4. The resume reproduction system as claimed in any one of claims 1 to 3, wherein the reproduction information file processing part includes:
a file analyzing part for analyzing a syntax of a read file; and
informing means for informing the operation managing part of a result of a file analysis by the file analyzing part.

5. The resume reproduction system as claimed in any one of claims 1 to 4, wherein, in the reproduction information file are described:
a process determination code for indicating whether or not a file is to be processed, a file name of the moving image file to be reproduced, and a reproduction start time to reproduce.

6. The resume reproduction system as claimed in any one of claims 1 to 5, wherein the moving image file processing part includes means for informing the operation managing part of: a reproduction elapsed time during the reproduction process for the moving image file; and a basic frame processing time at which a reproduction process is performed for a reference image generation frame which is a basic frame included in the moving image file, and includes all information necessary for reproducing an image of one frame.

7. The resume reproduction system as claimed in any one of claims 2 to 6, wherein the data processing part includes:
means for retrieving an arbitrary number of frames following a point of occurrence of an event for instructing a timing for creating the reproduction information file, from the moving image file;
means for generating a basic frame; and
means for coupling the basic frame and a difference frame including only a difference from an immediately preceding frame to generate one reproduction processing reference file.

8. The resume reproduction system as claimed in any one of claims 2 to 7, wherein the reproduction processing reference file includes a process determination code for indicating whether or not a file is to be processed, a file name of the moving image file to be reproduced, and at least a basic frame among the basic frame and a difference frame.

9. The resume reproduction system as claimed in any one of claims 1 to 8, wherein the operation managing part includes determining means for detecting a difference between a reproduction start time and a basic frame processing time, and determining whether or not a detected difference value is within an arbitrary threshold value.

10. The resume reproduction system as claimed in any one of claims 1 to 9, wherein the moving image file processing part is capable of selecting whether or not to start a reproduction process from an arbitrary basic frame in the moving image file, or to perform a reproduction process for a difference frame subsequently after reproducing frame data in the reproduction processing reference file.

11. The resume reproduction system as claimed in any one of claims 1 to 10, wherein the input operation part includes an interface for acquiring a mode value for an operator to set whether or not to perform a resume reproduction, a name of the moving image file to be reproduced, at least one of a reproduction event and a stop event, and an event for instructing a timing for creating the reproduction information file at an arbitrary position during reproduction of the moving image file.

12. A resume reproduction system which is a device for reproducing moving image data in an arbitrary format, wherein the device processes an arbitrary number of following frames into a basic frame when receiving a command to shift to a resume state.

13. A resume reproduction method comprising steps of:
acquiring a moving image file name to be reproduced, according to an operation event from an operator;
acquiring a moving image file corresponding to the moving image file name, and dividing the moving image file into different types of data when the moving image file is in a file format in which the different types of the data are multiplexed;
performing a reproduction process concerning a basic frame including all data of information necessary for reproducing one frame, and a reproduction process for a difference frame including only difference data from an immediately preceding frame; and
determining whether or not a reproduction stop command or a generation command for a reproduction information file has been issued according to the operation event from a file operator including the basic frame, and when a reproduction stop event or a reproduction information file generation command had occurred, creating a related file for performing a resume reproduction, and generating a basic frame from data of an arbitrary number of frames subjected to the reproduction process.

14. The resume reproduction method as claimed in claim 13, wherein the method further comprises steps of detecting a difference between a reproduction elapsed time at which a decoding process is executed, and a decoding process time for the new I frame, determining whether or not the difference value is equal to or smaller than a predetermined threshold value, and storing recoded data when the difference value is equal to or larger than the threshold value which is a reference value for determining whether or not the resume reproduction is effective.

15. The resume reproduction method as claimed in claim 13 or 14, wherein the method further comprises a step of determining whether or not to set a reproduction start position of the multiplexed data to an originally existing I frame, or to the new I frame.

16. A resume reproduction method comprising steps of:
discriminating whether or not a resume reproduction mode is specified according to an operation event;
reading a reproduction information file corresponding to a file name of data including an I frame when the resume reproduction mode is specified; and
searching for a reproduction processing reference file corresponding to the moving image file name according to a reproduction file name and a reproduction start time described in the reproduction information file, and when the reproduction processing reference file exists, reading the reproduction processing reference file, decoding the reproduction processing reference file and starting a decoding process from a P frame located at a position of the reproduction start time, and when the reproduction processing reference file does not exist, starting a decoding process from an I frame located immediately before the reproduction start time.

17. A program for causing a computer to execute the steps as claimed in any one of claims 13 to 16.

18. The system, method, or program as claimed in any one of claims 1 to 17, wherein the moving image file includes image data, audio data, and telop data.

19. A resume reproduction system which is a device for reproducing multiplexed data composed of different types of data multiplexed, comprising:
a storage part for storing a multiplex data file, a reproduction information file in which control information concerning a reproduction process, including a reproduction position of the multiplexed data, is described, and a reproduction processing reference file composed of recoded data of unit frames;
a multiplex file processing part for performing the reproduction process for the multiplex file; and
a reproduction information file processing part for performing an analysis process for the reproduction information file.
